Europäisches Patentamt

European Patent Office

Office européen des brevets

(11) Publication number: **0 573 704 A1**

# EUROPEAN PATENT APPLICATION

(21) Application number: **92201724.9**

(22) Date of filing: **11.06.92**

(51) Int. Cl.5: **G01V 1/02**

(43) Date of publication of application:
**15.12.93 Bulletin 93/50**

(84) Designated Contracting States:
**AT BE CH DE DK ES FR GB GR IT LI LU MC NL PT SE**

(71) Applicant: **Greenwell, Gregory Randall**
**Buitenrustplein 6**
**NL-2271 HD Voorburg(NL)**

(72) Inventor: **Greenwell, Gregory Randall**
**Buitenrustplein 6**
**NL-2271 HD Voorburg(NL)**

(74) Representative: **de Bruijn, Leendert C. et al**
**Nederlandsch Octrooibureau**
**Scheveningseweg 82**
**P.O. Box 29720**
**NL-2502 LS Den Haag (NL)**

(54) Method and apparatus for generating seismic waves.

(57) A method and apparatus for generating seismic waves in a medium, in which intersecting magnetic and electric fields are produced in the medium. Preferable said fields are mutually perpendicular.

FIG. 1

EP 0 573 704 A1

The invention relates to a method of generating seismic waves in a medium. As such the invention could find application in seismic surveying as well as in other methods of probing the earth's subsurface (liquid or solid) by means of seismic waves.

Such a method is for example known from the US-A-3,280,935.

The seismic waves commonly used to explore the earth - particularly for hydrocarbon deposits - are generated artificially by some physical disturbance at or near the surface of the earth. The waves propagate downwards, being partially reflected at the interfaces between underground layers of differing physical properties. These reflections can be picked up by special receivers at or near the surface of the earth. With proper processing, the arrival times and other characteristics of these signals can then reveal details of the subterranean strata.

To make measurements of this sort, two general types of seismic waves are used: P- and S-waves. P-waves, which are also known as compressional waves, are characterized by earth particle motion in the direction of wave propagation. S-waves, which are also known as shear waves, are characterized by earth particle motion in a direction perpendicular to that of the wave propagation. S-waves can be further categorized as vertically polarized (SV) or horizontally polarized (SH), depending on their orientation to the plane of incidence: the vertical plane passing through both the surface point of origin and the surface point of detection. If the particle motion of an S-wave is normal to the plane of incidence, it is an SH-waves; if it is parallel to the plane of incidence, it is an SV-wave.

Nearly all existing devices that are specially designed to radiate seismic shear waves work by imparting a horizontal rectilinear force to the ground, thereby radiating both SH-waves (mostly in the direction perpendicular to that in which the force is applied) and SV-waves (mostly in the same direction in which the force is applied and downwards) and - unavoidably - some P-waves (mostly in the same direction in which the force is applied). A few shear-wave sources, however, have been designed to impart a horizontal torque to the ground. The great advantage of such torsional seismic-wave sources is that they - alone among all other seismic-wave sources - can in principle radiate pure SH-waves in all horizontal directions.

To date, torsional seismic-wave sources have relied entirely on a mechanical coupling between the earth and a rotating member. Typically, the rotating member is connected to a baseplate designed for repeated coupling to and uncoupling from the ground, so as to make these sources readily transportable. The baseplate's underside is outfitted with corrugations, inverted pyramids or vanes that are meant to penetrate the ground and thereby effect the coupling. Such mechanical coupling, however, is ill-suited for the efficient transmission of oscillatory horizontal motion to the ground. The baseplate projections tend to shake themselves loose from the ground as the baseplate is made to rotate, quickly uncoupling the baseplate from the earth and thereby substantially reducing the amount of seismic energy generated. Moreover, since most baseplate projections tend to exert a vertical force component on the ground as they move, they usually generate P- and SV-waves as by-products and thereby detract from what makes a torsional seismic-wave source potentially so attractive; the generation of a single shear-wave mode.

According to general prior art seismic waves are produced in a liquid medium, such as seawater, by an air gun. Because air guns operate by releasing a burst of compressed air in the space of a few hundredths of a second, they have to be built to emit - within that short period - sufficient acoustic energy to be of use for seismic exploration. A vibratory source, in contrast, can have considerably less power output and still deliver a comparable amount of seismic energy, since its energy emission can be spread out over several seconds. The most unfavourable characteristic of air guns is that the primary pressure pulse is invariably trailed by a train of secondary pressure pulses caused by the expansion and contraction of bubbles. These secondary pulses, which are sometimes difficult to discriminate from the primary pulse's reflections, are absent in the seismograms of most marine vibratory seismic-wave sources.

Although marine vibratory seismic-wave sources in general have certain clear advantages over air guns, most of them to date suffer from a major disadvantage: they are notably inefficient in producing seismic waves. The reason is that nearly all of them generate pressure waves in water through the to-and-fro movement of a plate or membrane by either pneumatic or hydraulic means.

The object of the present invention is to provide a method of the above-mentioned type, in which the above-cited problems are obviated.

According to the invention, this object is achieved in that intersecting magnetic and electric fields are produced in the medium. Thereby energy is electromagnetically coupled to the medium.

The electromagnetic coupling of the present invention does not suffer from drawbacks of the known mechanical coupling, since it requires only a good electrical contact with the medium - not a mechanical one. Hence, the points of contact of a ground - based source constructed along the lines of the present invention remain substantially motionless with respect to the ground. In fact, apart from ancillary equipment that furnish electric power and cooling, the invention has virtually no moving parts.

A marine vibrating source constructed along the lines of the present invention, likewise, does not rely on the mechanical transmission of surface forces; instead, it imparts electromagnetic body forces directly to the seawater. Since it converts electromagnetic energy directly into hydrodynamic energy, it holds the potential of converting input electric power into output acoustic power with greater efficiency. Moreover, because the present invention can be embodied in a design having very few moving mechanical parts that are prone to wear and tear, it is likely to be more reliable than current marine vibratory seismic-wave sources.

More specifically, the invention relates to an apparatus for generating seismic waves, characterized by means of establishing a magnetic field and an electric field that intersect each other in the medium.

Preferably, the magnetic and electric fields should be mutually perpendicular.

In order to reduce the amount of seismic energy needed to produce a useful signal at a predetermined distance, the polarity of one or both fields is reversed with a frequency that varies continuously in a non-repetitive fashion. Undesirable transient effects (namely, eddy currents) caused by a varying magnetic flux can be lessened if the strength of the magnetic fields is maintained at a constant level, while the strength of the electric field is varied.

Furthermore, since torsional vibrations of the ground have advantages, a radial electric field is used to generate them.

Embodiments and elaborations of the invention are specified in the further subclaims.

The invention will be explained hereafter with reference to the drawings, wherein:

Figure 1 shows a side-view cross section of an embodiment of the invention.

Figure 2 shows a top-view cross section of the embodiment shown in Fig. 1.

Figure 3 shows a side-view cross section of an other embodiment of the invention.

Figure 4 illustrates the relative orientation of the magnetic and electric vector fields, in a cross section through the medium, produced by the embodiment as shown in Fig. 3.

Figure 5 illustrates the direction and magnitude of the electromagnetic force imparted to the ground just under its surface by the intersecting fields indicated in Fig. 4.

Figure 6 depicts a longitudinal cross section of a further embodiment of the invention in particular suited to marine applications.

Figure 7 depicts the transverse cross section of the embodiment as indicated in Fig. 6.

Figure 8 shows a top-view cross section of a preferred embodiment of the invention for marine applications.

Figure 9 shows a side-view cross section of the embodiment as illustrated in Fig. 8.

Figure 10 shows a front-view cross section of the embodiment as illustrated in Figs. 8 and 9.

Although the present invention can in principle be adapted to construct many different kinds of S- and P-wave sources, two specific embodiments are considered here in detail: a ground-based, torsionally vibrating source of SH-waves and a marine, longitudinally vibrating source of P-waves.

The torsionally vibrating source was singled out as one example of the method's application because it has certain inherent advantages over all other types of seismic-wave sources:

(1) In the ideal case of a homogeneous, isotropic, elastic conductive medium, it radiates pure SH-waves. Unlike P- and SV-waves, SH-waves are not converted into other wave types upon reflection or refraction from horizontal interfaces. Since sedimentary layers tend to be horizontally disposed, a source of pure SH-waves makes for seismograms that are less contaminated by other kinds of seismic waves.

(2) If the frequency of the transmitted signal can be precisely controlled over a prolonged time interval - say, 15 seconds - the power needed to produce a usable signal at a distant geophone can be reduced by cross-correlating the emitted signal with the signals received by multiple geophones or geophone arrays.

(3) The frequency control of the emitted signal can additionally be exploited to enhance the directivity of the radiated energy and to shift the angle of emergence of the main radiation lobe by applying suitable shifts in phase or frequency between more than one such source, arranged in an array.

Points (2) and (3) above apply equally well to an underwater vibratory source of P-waves. For these reasons, it too has certain inherent advantages over conventional seismic-wave sources.

The electromagnetic coupling of the present invention - regardless of its specific embodiment - is effected by establishing both a magnetic and an electric field in the medium in which the seismic waves are meant to be generated. The force per unit volume $\mathbf{F}$ imparted to the medium is then given by the expression

$$\mathbf{F} = {}^1\!/\rho \; \mathbf{E} \times \mathbf{B}, \qquad (1)$$

where $\mathbf{E}$ and $\mathbf{B}$ are respectively the vector representations of the electric field intensity and the magnetic flux density, and $\rho$ is the resistivity - a constitutive parameter of the medium. It is preferred to maximize the force imparted to the medium by orienting the electric and magnetic fields in such a way that they are mutually perpendicular. Indeed, for the method to work the fields cannot be aligned and the medium must be conductive (otherwise $\mathbf{F} = 0$). Since seismic waves are generally induced in the ground or in seawater (both of which are conductive media), the latter requirement does not really restrict the method's application to seismic surveying.

To generate a seismic wave one or both of the fields must be made to vary in time. For instance, quickly bringing both fields together from zero strength to their respective peak strengths and back to zero would result in the generation of a seismic wave. Undesirable transient effects resulting from such time-varying fields, however, can be lessened by keeping one of the fields at peak strength while the other is varied or pulsed. Indeed, periodically varying the strength of one of the fields - say, by reversing the field direction 50 times a second - would result in the emission of a train of seismic waves. Whether the seismic waves thus generated are P-, SV- or SH-waves depends on the orientation of the resulting force vector field $\mathbf{F}$ with respect to the medium, since that determines the direction of particle motion.

In the example of a ground-based, torsionally vibrating, SH-wave source considered here, a powerful static magnetic field set up by an electric-current-conducting coil, preferably a superconducting coil, crosses an electric field established between an electrode, for example in form of a spike, and a surrounding circular electrode. By periodically reversing the current that flows between the electrodes, the ground underlying the coil is made to vibrate torsionally about an axis coinciding with the spike electrode. The seismic waves emanating from the moving ground are - for all intents and purposes - pure SH-waves.

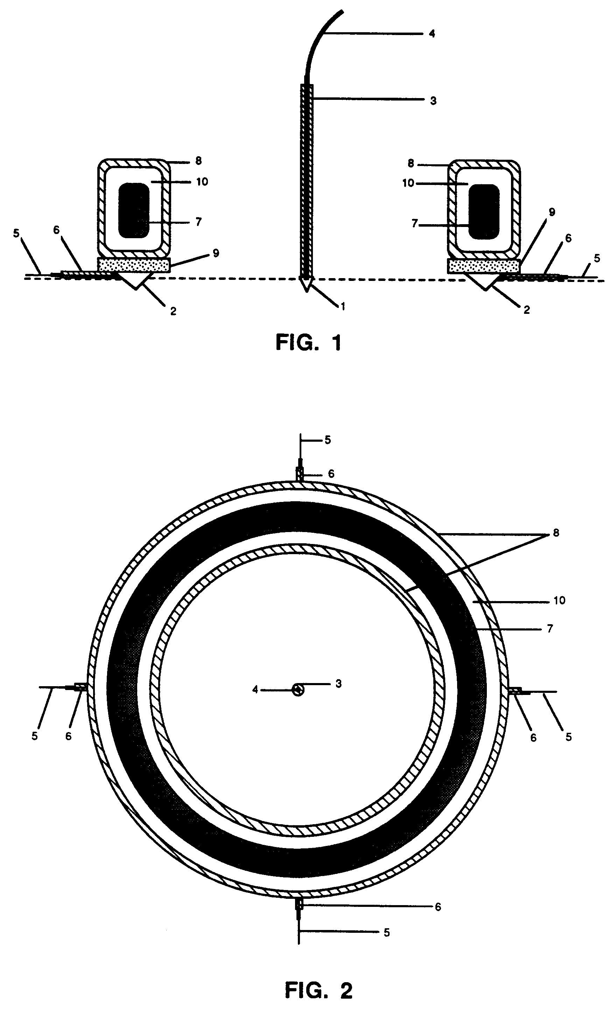

The basic set-up for this seismic-wave source is illustrated in Figs. 1 and 2. An electrode 1 in the form of a spike is implanted in the ground. The spike does not have to be driven deep into the ground; the objective is merely to ensure a good electrical contact between the electrode and the ground. (Wetting the ground before the electrode is implanted may also help to achieve the objective.) The cable runs to the electrode 1 through a stiff conduit 3 extending vertically upwards for some distance from the top of the electrode 1. (This orientation of the cable minimizes the lateral forces on it when the device is operating as described below.)

Lying on the ground and centred on the spike electrode 1 is another electrode 2 in the shape of a ring. Here too, a good electrical contact with the ground is necessary. To this end, the ring electrode 2 might have small conductive spikes on its underside. Alternatively, it can be given a triangular cross section, the thinner part of which can then be worked into the ground. Electrical cables 5 are attached to the ring electrode at several points symmetrically arranged about the electrode 2. These cables join together at a common connection to an electrical power bus (not shown). Because the lateral forces experienced by these multiple cables may be substantial once the device is in operation (as described below), they are also run through stiff conduits 6 secured firmly in place by some means. The spike electrode 1 and the electrical cable 4 attached to it, the ring electrode 2 and the electrical cables 5 attached to it, and the main power bus should all be capable of carrying a large current.

Directly above the ring electrode 2 is a superconducting coil 7 having mainly the same diameter as the ring electrode. The coil 7 should be in a strong housing 8 that is electrically insulated 9 from both the ground and the ring electrode 2 beneath it. To be useful, of course, the housing 8 also has to incorporate a cryostat 10, so that the coil can be cooled to superconducting temperatures. The combined weight of the coil 7 and its housing 8 (and perhaps that of the transporting vehicle) should be freely transmitted to the ring electrode 2, thereby helping to keep the electrode substantially motionless during operation of the device.

In addition to the two electrodes 1 and 2 and the superconducting coil 7 in its housing 8, the following ancillary equipment (not shown) is also necessary: a coolant tank or refrigerating unit and a suitable pump and pipes to circulate the coolant that keeps the superconducting coil 7 at its operating temperature; a high-power D.C. source first to energize the superconducting coil with a permanently circulating current and then to repeatedly charge the banks of capacitors that are discharged to establish a current flow through the ground between the inner, spike electrode 1 and the outer, ring electrode 2; various high-power electronics to regulate the power supply, the charge/discharge cycle of the capacitors and to periodically reverse the flow of current between the electrodes 1 and 2. The current-reversing circuits should also be capable of shifting the frequency of the reversals. Ideally, all of the necessary equipment should be transportable and should be easily readied for operation at a site.

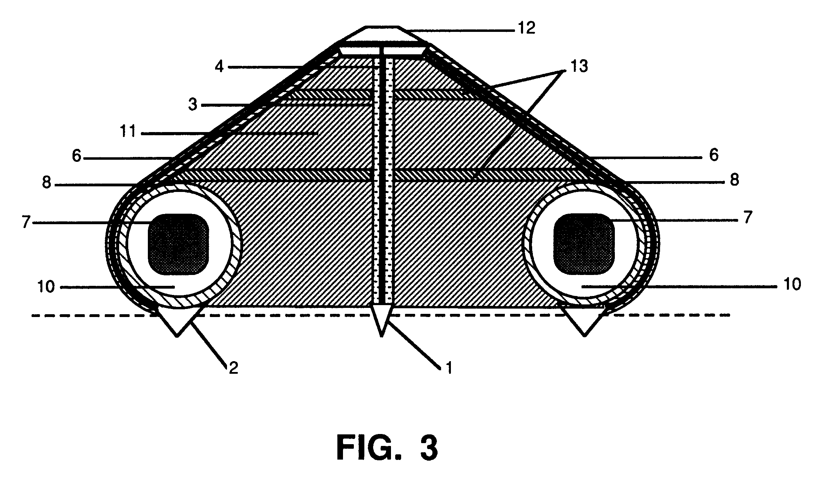

The goal of convenience in both the device's transportation and set up can be combined with the securing of the electrode conduits by integrating the two electrodes, the conduits, the electrical connections, the superconducting-coil housing, coolant pipes and the structural support members into one piece of equipment, such as the one shown in Fig. 3. Here, four vertical, radial vanes 11 anchored to the superconducting-coil housing 8 at four symmetric points provides support for both the central, vertical conduit 3 leading to the inner spike electrode 1 and the multiple conduits 6 leading to the outer ring electrode 2. The cables to both the inner and outer electrodes are attached to a coaxial cable via a connector 12 at the central apex of the vanes. Horizontal quarter-disk segments 13 between neighbouring vanes 11 reinforce the structure. Special care should be taken that all current-carrying components on the outside of the superconducting-coil housing 8 - including the top part of the ring electrode 2 - are electrically insulated from the housing. All of the components in and around the superconducting-coil housing 8, including the vanes 11 and reinforcements 13, should also be made from non-magnetizable materials. The entire piece of equipment should be designed to be readily raised and lowered by winch or hydraulic jacks, and it should be secured to the transporting vehicle in such a way that the vehicle's inertial mass can be exploited to effectively absorb any reactive torques imposed on the equipment during operation.

To generate seismic waves using this equipment, the superconducting coil 7 must first be made to carry a very large direct current circulating in, say, the clockwise direction when viewed from above. The magnetic field established by the circulating current at the ground surface is generally directed into the ground within the circular area circumscribed by the coil and generally directed out of the ground outside this circular area. Once the magnetic field has attained its peak strength, a powerful electric field is set up between the inner, spike electrode 1 and the outer, ring electrode 2 by applying an electrical potential difference between the electrodes. The electric field in the surface layer of the ground is generally aligned with horizontal rays emanating from the inner electrode; the field's direction, however, depends on the polarity of the applied potential difference. If, for example, the spike electrode 1 has a higher potential than the ring electrode 2, then the electric field will be directed towards the ring electrode. If, on the other hand, the polarity is reversed, then the electric field will be largely directed away from the outer electrode.

Because the earth is a conductor (albeit one generally characterized by a high resistivity) a current will flow between the electrodes, following the lines of the electric field. Specifically, the volume current density at any point in the ground is given by the vector relation

$$\mathbf{J} = {}^{1}/_{\rho}\mathbf{E}, \quad (2)$$

where $\mathbf{E}$ is the electric field intensity and $\rho$ is the resistivity of the ground.

This current between the electrodes is made to flow, first one way and then the opposite way, by electronic switching circuits that reverse the polarity of the electrodes. A conductor with a volume current density $\mathbf{J}$ in a magnetic field with a flux density $\mathbf{B}$ is subject to an electromagnetic force $\mathbf{F}$ given by the vector relation

$$\mathbf{F} = \mathbf{J} \times \mathbf{B}. \quad (3)$$

The form of Eq. (3) indicates that the magnitude of the force at a point in the conductor - the ground in this particular case - is equal to the product of the magnitudes of the volume current density and the magnetic flux density and the sine of the angle between the current-density and flux-density vectors at the point. Moreover, the direction of the force is normal to both vectors at that point.

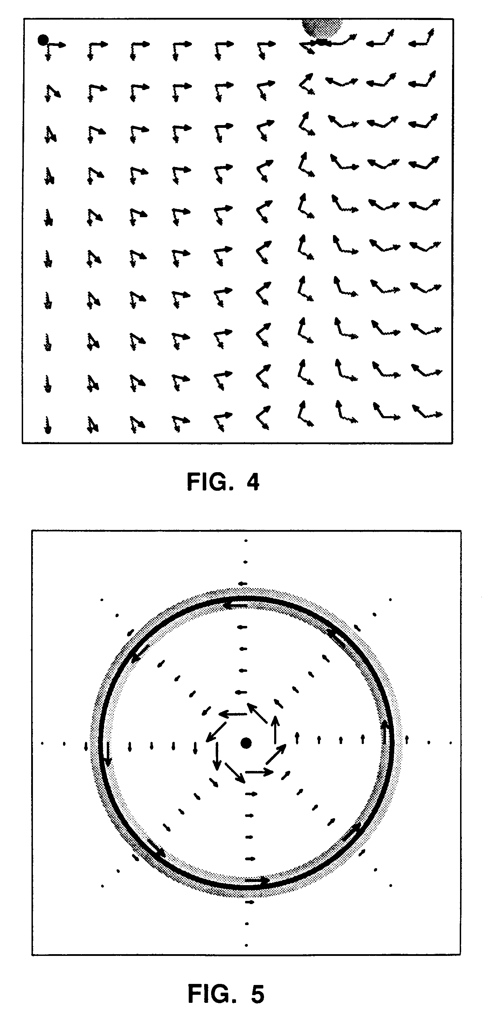

Given the gross orientation and the cylindrical symmetry of the magnetic and electric fields in the ground near the superconducting coil 7 and the two electrodes 1, 2, the electromagnetic force imparted to the ground underlying these components will produce a rotary torque about an axis coinciding with the central, spike electrode 1. The two plots of Fig. 4 and 5 make this plain. Figure 4 illustrates the relative orientation of the magnetic and electric vector fields in a cross section through the ground, extending radially from the central electrode 1 to a point somewhat beyond the ring electrode 2. The black dots mark the position of the two electrodes 1 and 2, and the grey semicircle the position of the superconducting coil 7 above the ring electrode 2. The grey arrows indicate the direction of the magnetic field, and the black arrows the direction of the electric field, at the points coinciding with the arrows' base. The arrows of Fig. 5 depict not only the direction but also the relative magnitude (given by the arrows' lengths) of the resulting electromagnetic force imparted to the ground, just under the earth's surface. The figure is a plan view, looking from above. The central, spike electrode 1 and the outer ring electrode 2 are superposed on the figure in black, and the superconducting coil 7 in grey. Note how the magnitude of the force first decreases with radial distance from the central electrode 1 before increasing as one approaches the superconducting coil 7 and then decays quickly to zero beyond the radius of the coil 7. In the vicinity of the central electrode 1 it is mainly the current density that determines the magnitude of the force, whereas under the superconducting coil 7 it is the magnetic flux density.

If, for example, a current of some $10^6$ amperes is flowing in a clockwise direction (viewed from above) in a superconducting coil 7 of 1-metre radius and the spike electrode 1 is given a potential difference of some 65 kilovolts relative to the ring electrode 2, then the total torque imparted to the underlying ground (which has, say, 100 ohmmetres resistivity) would be some 50 newtonmetres and would be directed counter-clockwise (viewed from above). Reversing the polarity of the electrodes 1,2 would result in an oppositely directed torque of the same magnitude. The sudden application of such a torque would produce a nearly pure SH-wave. In fact, periodically reversing the polarity of the electrodes 1,2 would result in the generation of a train of SH-waves of well-defined frequency content.

Actually, to reduce the amount of seismic energy needed to produce a useful seismic signal at a distant geophone, the frequency of the polarity reversals should be continuously varied in a nonrepetitive fashion while the seismic waves are being generated. In this way, one can cross-correlate the source signal with the recorded signals to obtain a seismogram similar to the one obtained had the seismic waves been generated by a high-energy, impulsive source. (This technique of compressing prolonged low-energy signals into high-energy pulses is widely applied with vibratory seismic-wave generators.)

The same controllability of the input signal that enables the recorded seismic signals to be compressed can be applied in another useful way whenever several such torsional seismic sources are operated in unison. By adjusting the spacing between two or more such sources as well as the difference in phase or frequency of the electrode currents of the sources, the aggregate radiation pattern of the multiple sources can be modulated on the basis of constructive and destructive interference between the individual sources' waves. In this way, for example, the bulk of the seismic energy can be directed along a particular angle of emergence. This technique of modulating the overall spatial emission pattern of an array of identical radiation elements is a well-known aspect of antenna theory.

The generality of the present invention is underscored by considering a further embodiment: an apparatus that generates P-waves in seawater instead of S-waves on land. Although the seismicwave type and the propagating medium are different, the basic operating principle of the apparatus is the same: an electric field is set up between two electrodes in such a way as to intersect - substantially at right angles - a powerful static magnetic field in the medium in question. By periodically reversing the flow of current between the electrodes, the medium can be made to vibrate in a direction perpendicular to both the electric and magnetic fields, thereby emitting seismic waves of a well-defined and controllable frequency content.

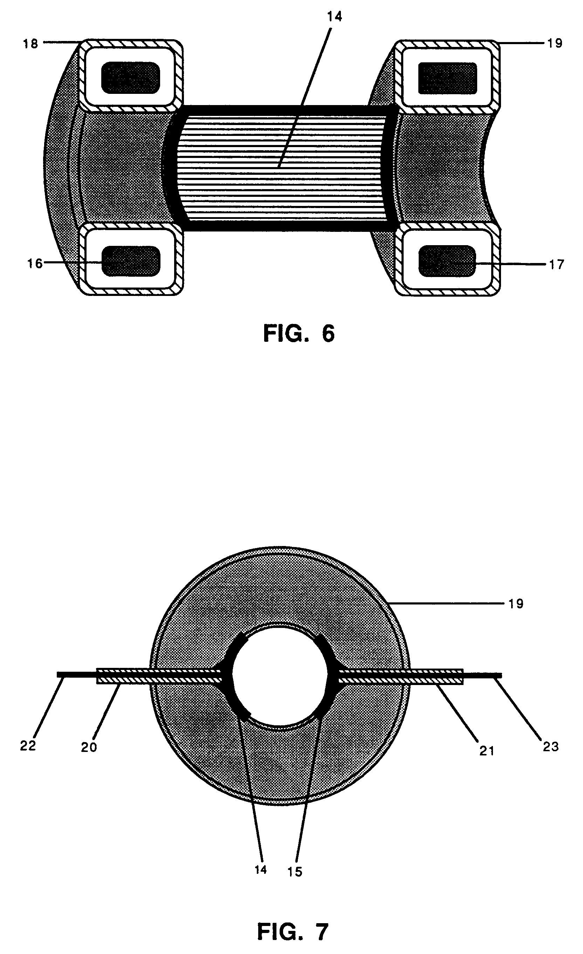

The basic components of the apparatus are shown in Fig. 6 and 7. A pair of plate electrodes 14, 15 are placed between a pair of superconducting coils 16, 17 encased in watertight housings 18, 19. The electrodes 14, 15, which have one surface electrically insulated, are aligned with the coils' common axis of symmetry. The exposed surfaces of the electrodes 14, 15 face each other, the line connecting their centres being horizontal. Extending from the insulated side of the electrodes are stiff conduits 20, 21 for the cables 22, 23 that provide the current to the electrodes 14, 15. Because the apparatus is designed to be towed through seawater in the direction of the coils' axis, this arrangement of coils 16, 17 and electrodes 14, 15 allows water to flow in through one coil centre, along the electrodes and out through the other coil centre. Moreover, when the apparatus is operated, as described below, water can be ejected vertically through the gap between the electrodes 14, 15. The marine P-wave source depends on the same ancillary pieces of equipment (not shown) as the ground-based SH-wave source: a cooling system, a D.C. power source, banks of capacitors, and switching electronics to control the charging/discharging cycle of the capacitors and the polarity of the electrodes 14, 15. The inherently greater transport capacity of ships, however, ameliorates the size and weight restrictions placed on this equipment.

The electrodes and their cables can have a power rating considerably smaller than those in the ground-based SH-wave apparatus. Because two superconducting coils are used in tandem to establish the magnetic field between the electrodes, the magnetic field can be made more uniform and stronger than in the land-based seismic-wave source; hence, the magnitude of the electric field between the electrodes can accordingly be reduced. Moreover, the resistivity of seawater is generally a few orders of magnitude smaller than that of surface soil and rock, so a given voltage across the electrodes will result in a larger current flow between them.

There are a few complications associated with the use of electrodes in seawater, however, that one should bear in mind when designing a marine version of the present invention. Apart from suffering from a greater susceptibility to corrosion and induced polarisation (the accumulation of electrolytic ions near the surface of the electrode), the electrodes also generate hydrogen and oxygen gas through the electrolysis of water. Both gases would be generated in the form of bubbles at both electrodes, since the polarity of the electrodes would be repeatedly reversed over the space of several seconds. Such bubbles could increase the effective resistivity of the seawater between the electrodes and might even affect the acoustic wavefield set up in the device. (In a fluid medium acoustic waves are tantamount to seismic waves.) Moreover, a mixture of hydrogen and oxygen gases is explosive; if ignited it may damage the electrodes.

There are several ways to solve this potential problem. One could, for example, make the electrodes out of a material that absorbs hydrogen and is nonreactive. Another possibility is to use perforated or porous electrodes and establish a pressure difference between the inner and outer faces of the electrode so that the gases can be quickly drawn through the electrode as they are produced, exiting at the electrode's outer face and entering an exhaust system. The means by which to achieve such a pressure difference could be active (say, by pumping) or passive (say, by applying the Venturi principle: configuring the water intake so that water flows considerably faster through a constriction along the outer surface of the electrode than along its inner surface). Alternatively, the electrode surface can be made smooth and the flow rate of the water past the electrodes merely kept high enough to sweep the gas out of the device before it can interfere with the flow of the electrolytic current. To achieve the necessary water velocity, water may have to be funnelled from a wide intake into a narrow channel, and the apparatus would have to be towed through the water faster than a certain speed. Regardless of the method applied to deal with the hydrogen and oxygen bubbles, the flow rate of water past the electrodes, the inter-electrode distance, and the magnitude and timing of current pulses between the electrodes should all be adjusted so as to keep the temperature near the electrodes low enough to prevent the ignition of the hydrogen/oxygen gas mixture. Indeed, to avoid any interruption of the current flow whatsoever, the device should be designed to keep the electrode temperature below the boiling point of seawater.

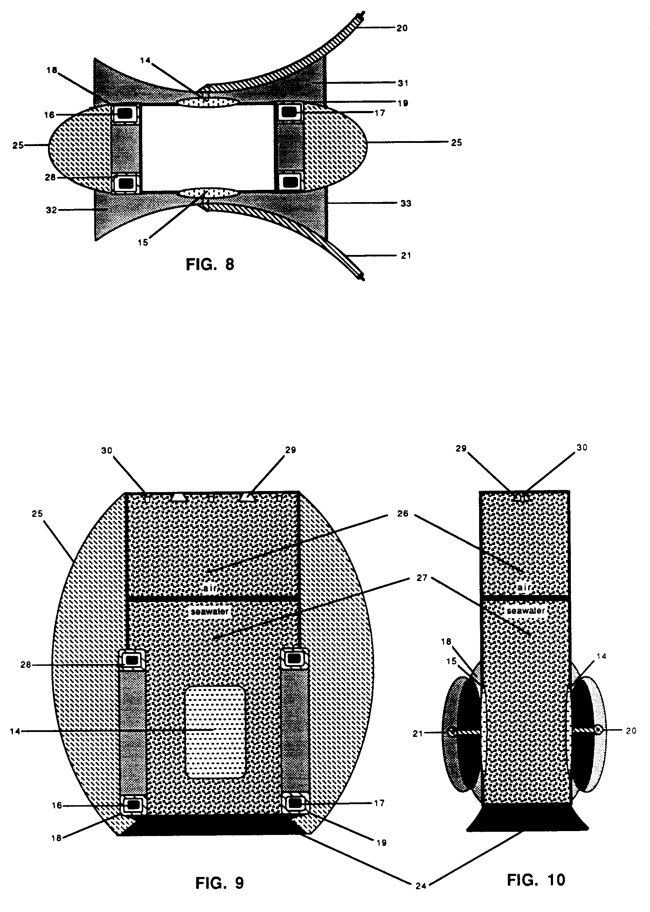

The seismic-wave source depicted in Figs. 8, 9 and 10 incorporates all the essential components of the basic apparatus of Figs. 6 and 7 but evinces a more practical design. Here, the Venturi principle is exploited to suck the gaseous electrolytic products from the region of crossed magnetic and electric fields through perforated electrodes 14, 15. In addition, the conduits 20, 21 leading to the electrodes 14, 15 are made to follow the lines of magnetic field as much as possible to minimise the stresses they have to withstand. The generated acoustic waves are made to radiate downwards by closing the top opening and by attaching a horn-shaped flange 24 at the bottom opening so as to better match the opening's acoustic impedance to that of the surrounding liquid medium. One or more of such devices, which should be built of non-magnetisable materials, can be rigidly connected to the underside of a sea vessel through a stiff structure incorporating a streamlined fairing 25 within which coolant pipes, a power bus and cables for transmitting control signals can be run. The mass of the vessel should provide sufficient inertia to effectively nullify the reactive motion of the apparatus as it is operated.

Like the other embodiment of Figs. 6 and 7, the embodiment of Figs. 8-10 has superconducting coils 16, 17 enclosed in housings 18, 19 that incorporate cryostats 28. Furthermore, the apparatus is provided with a by-pass intake 31 and outlet 32 and a screen 33.

The most distinctive aspect of the apparatus of Figs. 8, 9 and 10 is the partially air-filled cavity 26 that extends upwards from the region of crossed electric and magnetic fields. An air/water interface is a very effective reflector of acoustic waves, so a layer of air at the top of the cavity would reflect downwards almost all the upward-moving acoustic waves in the water-filled part of the cavity 27. Moreover, the acoustic output of the device can in principle be increased by a few orders of magnitude if the frequency of the generated acoustic waves coincides with the cavity's natural resonance frequency, which is determined in part by the level of seawater in the cavity. Hence, the cavity can readily be "tuned" to emit strong acoustic waves of a particular frequency either by releasing pressurised air by means of an air-release valve 29 in the top of the cavity 26 (to raise the water level) or by injecting more air into the cavity 26 (to lower the water level) through an air injection nozzle 30.

A device such as that shown in Figs. 8, 9 and 10 would basically be operated like the SH-wave source described above. Both superconducting coils 16, 17 would first be energised with direct currents circulating in the same sense. Once the magnetic field between the coils 16, 17 had stabilised at its peak strength, an electric field is established between the two electrodes 14, 15, resulting in a current flow. Given the general horizontal and mutually perpendicular orientation of the current density and the magnetic field, the volume of seawater in the region of crossed fields would be subjected to a force tending to displace it vertically. If, for example, some $10^5$ amperes circulate in each coil 16, 17, then a potential difference of some 250 volts between the electrodes 14, 15 (which are taken to be 1 metre apart and half a metre from each coil) would impart a force of roughly 1,000 newtons on the volume of seawater in the region of the crossed fields. (It would also generate - in one second - a volume of gas approximately equal to 0.25 litres at standard temperature and pressure and enough heat to raise the temperature of a litre of water by approximately, 6 degrees Celsius.)

Whether the water volume would move downwards or upwards depends on the direction in which the current in the superconducting coils 18, 19 is circulating and on the direction of the current flow between the electrodes 14, 15. In any case, reversing the current flow would reverse the direction of the force. Hence, the up-and-down motion of the water volume between both the pair of coils and the pair of electrodes - and therefore the frequency content of the induced acoustic waves - can be regulated by the switching circuits (not shown) controlling the frequency of the current reversals. To take full advantage of the resonance properties of the cavity even as the operating frequency of the device is shifted up or down, the seawater level in the cavity would have to be lowered or raised in step with the frequency shift. Such a mechanism would ensure that both of the benefits of a vibrational seismic source with controllable frequency mentioned above - the reduction in the radiated-power requirement and the potential for spatial radiation-pattern shaping - can be fully realised. (One minor complication arises from the fact that the source moves as it radiates acoustic waves: the waves are slightly shifted in frequency on account of the Doppler effect. This effect, however, can easily be compensated for in the processing of the recorded signals.)

Similar to other embodiments the coils 16, 17 are enclosed by a housing 18, 19 incorporating also a cryostat 28.

Furthermore, the apparatus is provided with a by-pass intake 31 and outlet 32 and a screen 33.

Although only two preferred embodiments of the present invention have been described here in detail, it is to be understood that the scope of the invention covers any seismic-wave source that relying on an electromagnetic coupling to the medium by means of crossed electric and magnetic fields that intersect in the medium itself. Hence, the present invention would also encompass arrangements of electrodes and magnetic coils similar to the ones described above but in which the magnetic field produced by the coil is made to vary while the electric field produced by the electrodes is kept constant. By the same token, it would also include arrangements of electrodes and magnetic coils oriented on the ground in such a way as to transmit P and SV waves instead of SH waves into the ground when they are energized. For example, if a magnetic field with a horizontal axis of symmetry is crossed with an electric field in the ground also largely horizontal but normal to the axis of the magnetic field, then the ground would be subjected to a vertical force that could be used to generate P and SV waves.

## Claims

1. Method of generating seismic waves in a medium, characterized in that intersecting magnetic and electric fields are produced in the medium.

2. Method according to claim 1, characterized in that the magnetic and electric fields are mutually perpendicular.

3. Method according to claim 1 or 2, characterized in that the strength of either the magnetic field or the electric field is maintained at a constant level, while the strength of the other field is varied.

4. Method according to claim 3, characterized in that the polarity of the varying field is reversed with a frequency that varies continuously in a non-repetitive fashion.

5. Method according to claim 1, 2, 3 or 4, characterized by a radial electric field.

6. Apparatus for generating seismic waves in a medium, characterized by magnetic- and electric-field means of establishing in the medium a magnetic field and an electric field that intersect.

7. Apparatus according to claim 6, characterized in that the magnetic field is perpendicular to the electric field.

8. Apparatus according to claim 6 or 7, characterized in that the strength of either the magnetic field or the electric field is maintained at a constant level, while the strength of the other field is varied.

9. Apparatus according to claim 8, characterized in that the polarity of the varying field is reversed with a frequency that varies continuously in a non-repetitive fashion.

10. Apparatus according to claim 6, 7, 8 or 9, characterized by a radial electric field.

11. Apparatus according to one of the claims 6-10, characterized in that the magnetic-field means comprises an electric-current-conducting coil to be positioned near the medium and electrically insulated therefrom, in which position its axis extends nearly perpendicular to the medium surface.

12. Apparatus according to one of the claims 6-11, characterized in that the electric-field means consists of a central electrode and a second annular electrode surrounding the central electrode, which electrodes are to be implanted at least partially into the medium and to be supplied with an electric voltage.

13. Apparatus according to claim 12, characterized in that the annular electrode has a triangular cross-section so that it can be worked into the medium.

14. Apparatus according to claim 12, characterized in that the annular electrode is provided with projections on its underside to be worked into the medium.

15. Apparatus according to one of the claims 6-10, characterized in that the magnetic-field means comprise two spaced electric-current-conducting coils the axis of which coincide substantially.

16. Apparatus according to claim 15, characterized in that the electric-field means comprise two spaced opposing electrodes to be supplied with an electric voltage, which are positioned between the coils on either side of the axis of the coils.

17. Apparatus according to claim 15 or 16, characterized in that a cavity is defined around the space where the magnetic and electric fields cross each other, that the coils are accommodated in recesses of two opposing walls of the cavity such that the central apertures of the coils constitute the inlet and the outlet of the cavity for the supply of a part of the liquid medium, in which the seismic waves are to be produced, that spaced from the axis of the coils in a plane parallel to the magnetic and electric field lines an acoustic-wave reflecting surface is provided.

18. Apparatus according to claim 17, characterized in that the reflecting surface is formed by an air/water interface constituted by an air cushion and the liquid medium supplied to the cavity.

19. Apparatus according to claim 18, characterized in that the natural resonance of the cavity is tuned to the frequency of the induced seismic waves by increasing or decreasing the dimension of the air cushion in the direction of the cavity opening.

20. Apparatus according to claim 17, 18 or 19, characterized in that a horn-shaped flange is provided at the cavity opening opposite the cavity's reflecting surface.

21. Apparatus according to one of the claims 15-20, characterized in that the electrodes are perforated or porous for the passage of gases produced in the cavity.

22. System comprising two or more apparatuses according to one of the claims 6 - 21, characterized in that the aggregate radiation pattern of the apparatus is modulated by adjusting the spacing of at least two apparatuses and/or the difference in phase and/or frequency of the individual fields established by the apparatuses.

FIG. 1

FIG. 2

10

**FIG. 3**

EP 0 573 704 A1

FIG. 4

FIG. 5

18 —

14

19 —

16 —

— 17

**FIG. 6**

19 —

22    20

14    15

21    23

**FIG. 7**

FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 296 486 (VASILE)<br>* column 3, line 5 - column 3, line 16 *<br>--- | 1 | G01V1/02 |
| A | US-A-4 523 473 (CHAMUEL)<br>* column 1, line 43 - column 2, line 14 *<br>--- | 1 | |
| A,D | US-A-3 280 935 (BROWN)<br><br>----- | | |

**TECHNICAL FIELDS SEARCHED (Int. Cl.5 )**

G01V

The present search report has been drawn up for all claims

| Place of search | Date of completion of the search | Examiner |
|---|---|---|
| THE HAGUE | 05 FEBRUARY 1993 | ANDERSON A.TH. |